# EUROPEAN PATENT SPECIFICATION

(11) **EP 4 082 829 B1**
(45) Date of publication and mention of the grant of the patent: **26.06.2024**
(21) Application number: 21171054.6
(22) Date of filing: 28.04.2021
(51) Int. Cl.: B60N 2/07

(54) **A SEAT RAIL SYSTEM FOR A VEHICLE AND A VEHICLE COMPRISING A SEAT RAIL SYSTEM**
SITZSCHIENENSYSTEM FÜR EIN FAHRZEUG UND FAHRZEUG MIT EINEM SITZSCHIENENSYSTEM
SYSTÈME DE RAIL DE SIÈGE POUR UN VÉHICULE ET VÉHICULE COMPRENANT UN SYSTÈME DE RAIL DE SIÈGE

(43) Date of publication of application: 02.11.2022
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: JONSSON, Tony, 441 91 ALINGSÅS (SE)
(74) Representative: Zacco Sweden AB

(56) References cited:
- DE-A1- 10 210 555
- DE-B3-102016 217 843

## Description

### TECHNICAL FIELD

The present invention relates to a seat rail system for vehicles. The seat rail system comprises an upper rail and a stationary lower rail attachable to a floor structure of the vehicle. The upper rail is configured for being attached to a vehicle seat and the upper rail is movably arranged in relation to the lower rail in a longitudinal vehicle direction. The invention further relates to a vehicle comprising a seat rail system.

### BACKGROUND

Vehicle seats are commonly arranged with a seat rail system for a mechanical sliding connection between the vehicle seat and a floor structure of the vehicle. Conventional seat rail systems comprise a pair of two interconnected rails that are linearly slidable relative to each other, where a lower rail is stationary attached to the floor structure and an upper rail is fastened to the vehicle seat. With the seat rail systems, the vehicle seat is adjustable in a longitudinal vehicle direction for a convenient positioning of the vehicle seat. Traditional seat rail systems commonly have complex load paths from the floor structure to the vehicle seat, which is negative when the seat rail system is exerted to forces in a vehicle impact event. The complex load paths are resulting in heavy and costly constructions of the seat rail systems to achieve desired performance. This is especially of concern if the vehicles are equipped with vehicle seats having integral seat belt systems only connected to the vehicle seats, where all impact forces need to be absorbed by the vehicle seat construction.

There is thus a need for an improved seat rail system having the ability to absorb load in vehicle impact events efficiently for improved safety of vehicle occupants, where the seat rail system is fulfilling legal requirements, is lightweight in construction, and is having a low cost design.

Patent publication DE 102016217843 A1 discloses a longitudinal adjuster for a vehicle seat, having at least one pair of rails consisting of a first seat rail, in particular for connection to a seat frame side part, and a second seat rail, in particular for connection to a vehicle structure. The seat rails of the pair of seat rails can be displaced relative to one another in a longitudinal direction and alternately engage around one another to form an inner channel. An anchor fixed to the second seat rail is arranged in the inner channel, and in the inner channel, a reinforcement profile is fixed to the first seat rail. The reinforcement profile and the anchor are normally spaced apart and in response to a predetermined force, they are engaged into one another.

### SUMMARY

An object of the present invention is to provide a seat rail system for vehicles and a vehicle comprising a seat rail system, where the previously mentioned problems are avoided. This object is at least partly achieved by the features of the independent claims. The dependent claims contain further developments of the seat rail system.

The invention concerns a seat rail system for a vehicle. The seat rail system comprises an upper rail and a stationary lower rail attached to a floor structure of the vehicle. The upper rail is configured for being attached to a vehicle seat and movably arranged in relation to the lower rail in a longitudinal vehicle direction. The seat rail system further comprises an elongated load member attached to the lower rail, and the load member is extending through the floor structure. The upper rail comprises a front rail structure and a rear rail structure. The load member is extending into a lower portion of the front rail structure and into a lower portion of the rear rail structure.

Advantages with these features are that the load member is arranged to be connected to both the floor structure and to the lower portions of the front rail structure and the rear rail structure, and with this configuration the seat rail system has the ability to absorb loads efficiently in a vehicle impact event for increased safety of vehicle occupants. The simple and efficient construction of the seat rail system with the load member is providing a straight symmetrical load path all the way from the floor structure to the vehicle seat via the upper rail, allowing a compact construction of the system with low height and low weight at a low cost. Through the interaction between the floor structure and the upper rail via the load member, forces are efficiently built up in the system in the vehicle impact event for a high system stiffness that is preventing large deformations.

According to one embodiment, one or more lower parts of the load member are extending though corresponding openings of the floor structure. An upper part of the load member is extending into the lower portion of the front rail structure and into the lower portion of the rear rail structure. The load member is configured for being directly in engagement with the floor structure and at least one of the lower portions of the front rail structure and the rear rail structure upon an impacting force in the longitudinal vehicle direction in a vehicle impact event for establishing a load path from the floor structure to the upper rail via the load member. The extension of the lower parts through the openings is securing a firm engagement between the load member and the floor structure in the vehicle impact event. The openings are further simplifying the mounting of the lower rail to the floor structure. The established load path from the floor structure to the upper rail via the load member is preventing large deformations of the rails through the anchoring of the upper rail to the floor structure via the load member.

According to an embodiment, the one or more lower parts of the load member are configured for being in engagement with a lower surface of the floor structure in the vehicle impact event. The lower surface is absorbing the forces occurring in the vehicle impact event, and the floor structure is of a strong and robust construction. The engagement of the lower parts and the floor structure is securing that the lower rail is not separated from the floor structure in the vehicle impact event.

According to an embodiment, the one or more lower parts of the load member are extending through a lower section of the lower rail. In this way, the load member can be connected to the lower rail for forming a strong construction. The load member is with this configuration forming a part of the lower rail that is simplifying the assembling of the system.

According to a further embodiment, the one or more lower parts of the load member have lower T-shaped cross-sectional configurations with a laterally extending lower flange. The lower flange is configured for being in engagement with the floor structure in the vehicle impact event. The lower flange is efficiently engaging the floor structure in the vehicle impact event for a secure and strong connection between the load member and the floor structure. The secure connection through the lower flange is preventing that the lower rail is separated from the floor structure in the vehicle impact event.

According to a further embodiment, the upper part of the load member has an upper T-shaped cross-sectional configuration with a laterally extending upper flange. The upper flange is configured for being in engagement with the lower portion of the front rail structure and the lower portion of the rear rail structure in the vehicle impact event. The upper flange is efficiently engaging the lower portions of the upper rail in the vehicle impact event for a secure and strong connection between the load member and the upper rail. The secure connection is preventing that the upper rail is separated from the lower rail in the vehicle impact event.

According to an embodiment, the lower portion of the front rail structure has a bell-shaped cross-sectional configuration forming a front cavity configured for embracing the upper flange, and the lower portion of the rear rail structure has a bell-shaped cross-sectional configuration forming a rear cavity configured for embracing the upper flange. The respective cavities are arranged around the upper flange of the load member for a simple and robust connection between the lower portions and the load member. The cavities are further allowing a longitudinal displacement of the upper rail in relation to the lower rail in normal operating conditions for positioning the vehicle seat, without any interaction between the load member and the lower portions.

According to an embodiment, the upper rail comprises a first side section and a second side section joined to each other, where the front cavity and the rear cavity are formed between the first side section and the second side section. The first side section forming the front cavity comprises a lateral inwardly projecting first flange and the second side section forming the front cavity comprises a lateral inwardly projecting second flange. The first side section forming the rear cavity comprises a lateral inwardly projecting first flange and the second side section forming the rear cavity comprises a lateral inwardly projecting second flange. The first flanges and the second flanges are arranged below the upper flange and configured for being in engagement with the upper flange in the vehicle impact event. The side sections are providing a simple construction of the upper rail, where the cavities are formed by the joined side sections. The side sections may be constituted by welded sheet metal parts that are forming the cavities, the first flanges, and the second flanges. Other materials that may be used for the upper rail are for example light alloys and polymeric materials.

According to a further embodiment, the front rail structure comprises an upper portion. The upper portion comprises a front fastening portion configured for attaching a front part of the vehicle seat to the front rail structure. The rear rail structure comprises an upper portion. The upper portion comprises a rear fastening portion configured for attaching a rear part of the vehicle seat to the rear rail structure. The respective upper portions with the front and rear fastening portions are arranged for connecting the vehicle seat to the upper rail. The vehicle seat may for example be arranged with a frame structure provided with fastening brackets or similar arrangements for connecting the vehicle seat to the front and rear fastening portions for a strong and secure connection.

According to embodiments, the front fastening portion is positioned in the longitudinal vehicle direction between a front end and a rear end of the lower portion of the front rail structure, and/or the rear fastening portion is positioned in the longitudinal vehicle direction between a front end and a rear end of the lower portion of the rear rail structure. This positioning in the longitudinal vehicle direction, is distributing loads in the upper rail efficiently in a vehicle impact event, and through the positioning deformations of the lower portions can be minimized for a strong connection between the upper rail and the load member.

According to embodiments, the front fastening portion is centrally positioned in the front rail structure in the longitudinal vehicle direction between the front end and the rear end, where the central positioning is enabling a load distribution over the length of the lower portion in the longitudinal vehicle direction between the front end and the rear end in the vehicle impact event, and/or wherein the rear fastening portion is centrally positioned in the rear rail structure in the longitudinal vehicle direction between the front end and the rear end, where the central positioning is enabling a load distribution over the length of the lower portion in the longitudinal vehicle direction between the front end and the rear end in the vehicle impact event. The central positioning of the front fastening portion and/or the rear fastening portion is distributing loads evenly within the front rail structure and/or rear rail structure in a vehicle impact event. The forces from the vehicle seat is transferred to the upper rail and further distributed into the lower portions, and the central positioning is allowing the loads to be distributed along the full lengths of the lower portions in the vehicle impact event. With this configuration, the upper rail can be made lightweight in construction providing a high safety through a strong connection between the upper rail and the load member.

According to a further embodiment, the upper rail further comprises an intermediate structure arranged between and connected to the front rail structure and the rear rail structure. The intermediate structure is arranged above the load member. The front rail structure and the rear rail structure are arranged at a distance from each other in the longitudinal vehicle direction and connected to each other with the intermediate structure. The longitudinal distance between the front rail structure and the rear rail structure may be different depending on the seat rail system configuration and the design of the vehicle seat. The intermediate structure is thus holding the front rail structure and the rear rail structure connected to each other and in position in relation to each other.

According to a further embodiment, the seat rail system further comprises laterally extending bearing structures, where the bearing structures are attached to the upper rail and extending in opposite directions from the upper rail. The bearing structures are configured for movably engaging the lower rail. The bearing structures are providing a low-friction movable engagement between the upper rail and the lower rail.

According to an embodiment, the bearing structures comprise bearings, and the lower rail comprises bearing surfaces laterally arranged on opposite sides of the load member. The bearings and the bearing surfaces are configured for interacting with each other when the upper rail is displaced in relation to the lower rail. The bearings may for example be roller bearings and the roller bearings may be provided with wheel elements or similar structures for rolling interaction with the bearing surfaces upon longitudinal displacement of the upper rail in relation to the lower rail. The bearings may alternatively be sliding bearings for sliding interaction with the bearing surfaces upon longitudinal displacement of the upper rail in relation to the lower rail.

According to a further embodiment, the floor structure is an integrated structural part of a body-in-white structure of the vehicle. With the integrated floor structure, a strong construction of the system is achieved for efficiently absorbing loads in the vehicle impact event.

The invention further concerns a vehicle comprising the seat rail system.

### BRIEF DESCRIPTION OF DRAWINGS

The invention will be described in detail in the following, with reference to the attached drawings, in which
- Fig. 1: shows schematically, in a side view, a vehicle with a seat rail system having an upper rail attached to a vehicle seat and a lower rail attached to a floor structure, according to the invention,
- Fig. 2: shows schematically, in a perspective view from above, the seat rail system, according to the invention,
- Fig. 3: shows schematically, in an exploded perspective view, the seat rail system, according to the invention,
- Fig. 4: shows schematically, in a perspective view from above, the upper rail of the seat rail system, according to the invention,
- Fig. 5a-b: show schematically, in cross-sectional front views, the seat rail system in normal operating conditions and in a vehicle impact event, according to the invention,
- Fig. 6: shows schematically, in a perspective view from above, the lower rail of the seat rail system and the floor structure, according to the invention,
- Fig. 7a-c: show schematically, in perspective views from above, the lower rail of the seat rail system in different mounting positions in relation to the floor structure, according to the invention,
- Fig. 8: shows schematically, in a perspective view from below, the lower rail of the seat rail system and the floor structure, according to the invention,
- Fig. 9: shows schematically, in a perspective view from above, the seat rail system with a drive mechanism, according to the invention,
- Fig. 10: shows schematically, in a side view, a vehicle with a seat rail system having an upper rail attached to a vehicle seat and a lower rail attached to a floor structure, according to an alternative embodiment of the invention,
- Fig. 11a-b: show schematically, in perspective views from above, the seat rail system, according to the alternative embodiment of the invention, and
- Fig. 12: shows schematically, in a perspective view from above, the upper rail of the seat rail system, according to the alternative embodiment of the invention.

### DESCRIPTION OF EXAMPLE EMBODIMENTS

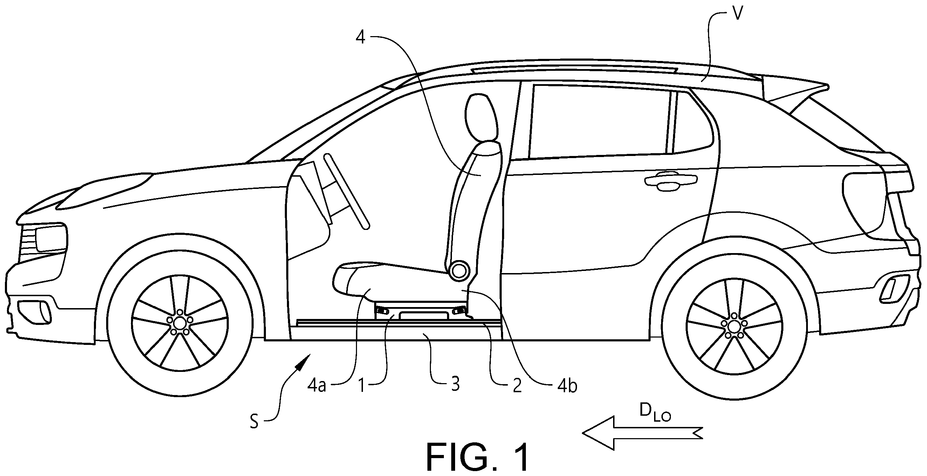

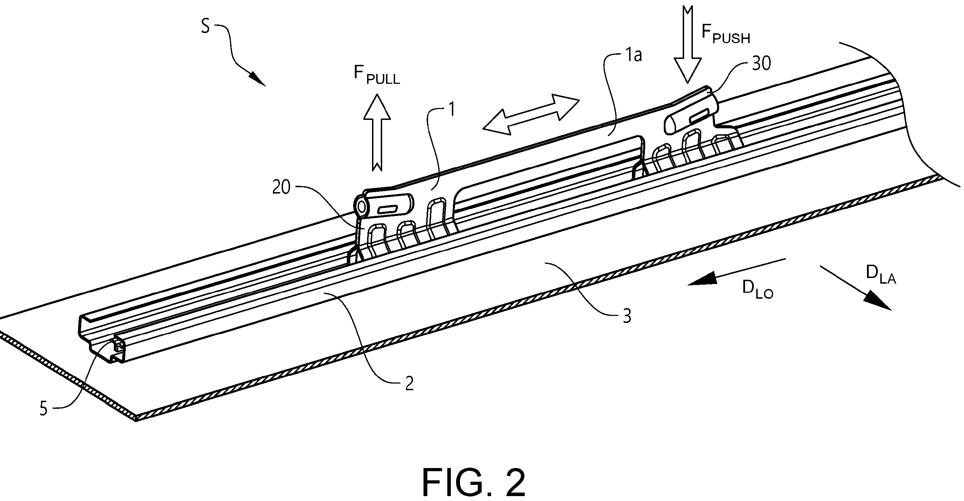

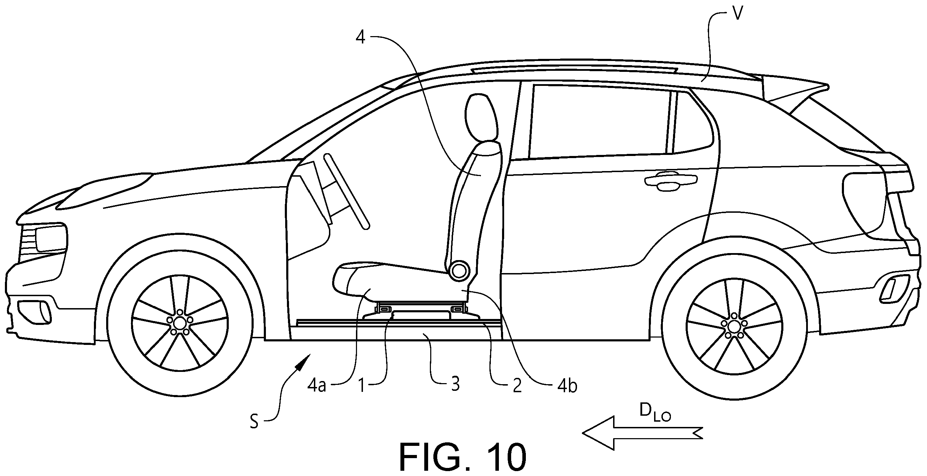

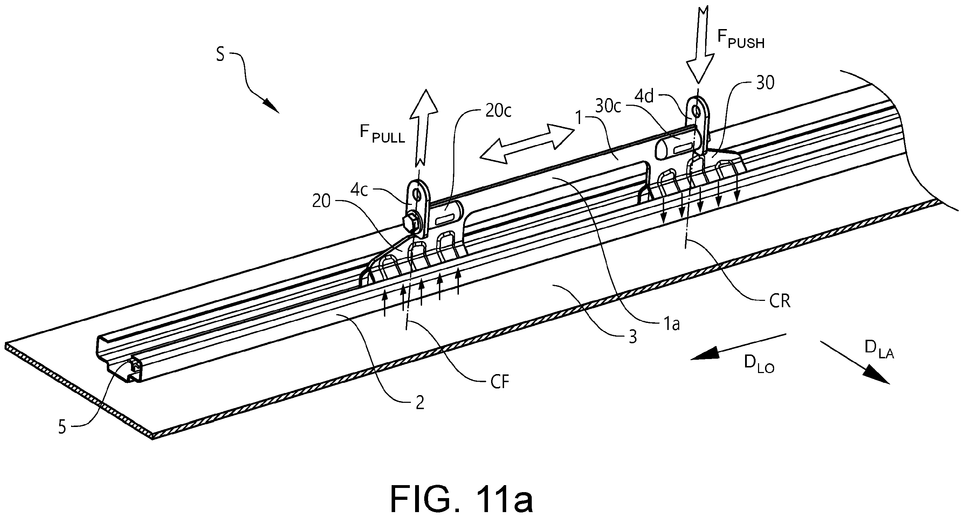

Figure 1 schematically shows a seat rail system S for a vehicle V. The seat rail system S comprises an upper rail 1 and a stationary lower rail 2, as illustrated in figures 1-3, 5a-b, 9, 10 and 11a-b. The lower rail 2 is attached to a floor structure 3 of the vehicle V, and the upper rail 1 is attached to a vehicle seat 4. The upper rail 1 is movably arranged in relation to the lower rail 2 in a longitudinal vehicle direction D_{LO}, as indicated with the double arrow in figures 2 and 11a-b, for a convenient adjustment and positioning of the vehicle seat 4 in relation to the floor structure 3 in the longitudinal vehicle direction D_{LO}. The upper rail 1 comprises a front rail structure 20 and a rear rail structure 30, as shown in the figures. A lower base surface 2b of the lower rail 2 is positioned in connection to an upper surface 3c of the floor structure 3. The seat rail system S may be provided with suitable positioning and locking arrangements for positioning of the upper rail 1 in relation to the lower rail 2 when adjusting the vehicle seat 4. The floor structure 3 is forming part of the seat rail system S, as will be further described below. Usually, two parallel seat rail systems S are used for holding one vehicle seat 4. In figures 1 and 10, the seat rail systems S are illustrated in connection to a front vehicle seat 4, but the seat rail systems S may be used also for other adjustable vehicle seats.

A lateral vehicle direction D_{LA} is defined as a direction perpendicular to the longitudinal vehicle direction D_{LO}. The expressions upper, lower, upwards, and downwards, used in this context are referring to directions in relation to the seat rail system S when installed in the vehicle V in the position illustrated in figure 1.

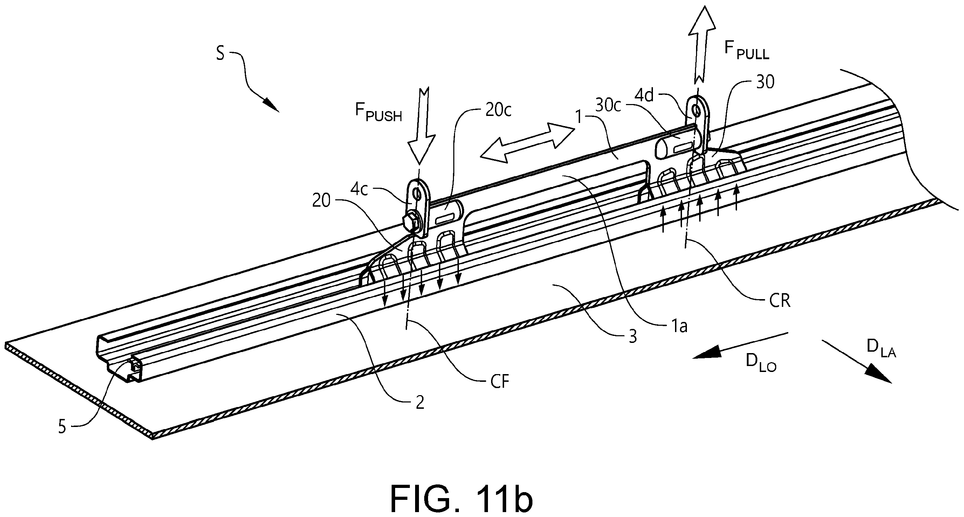

The floor structure 3 is suitably an integrated structural part of a body-in-white structure of the vehicle V having an extension in the longitudinal vehicle direction D_{LO} and lateral vehicle direction D_{LO}, or essentially in the longitudinal vehicle direction D_{LO} and lateral vehicle direction D_{LO}, as indicated in for example figures 2 and 11. With a body-in-white structure of the vehicle V is meant a car body construction in which the car body's sheet metal components have been welded together, where any moving parts, the motor or engine, the chassis or the chassis sub-assemblies, and the trim have not yet been added to the car body construction. By attaching the lower rail 2 to the floor structure 3 integrated in the body-in-white structure of the vehicle V, a secure attachment of the lower rail 2 is accomplished. Non-illustrated additional brackets or similar arrangements may for example be used for the attachment of the lower rail 2 to the floor structure 3, where screw fasteners or similar fastening devices can be used for a firm and secure attachment of the lower rail 2 to the floor structure 3 via the additional brackets.

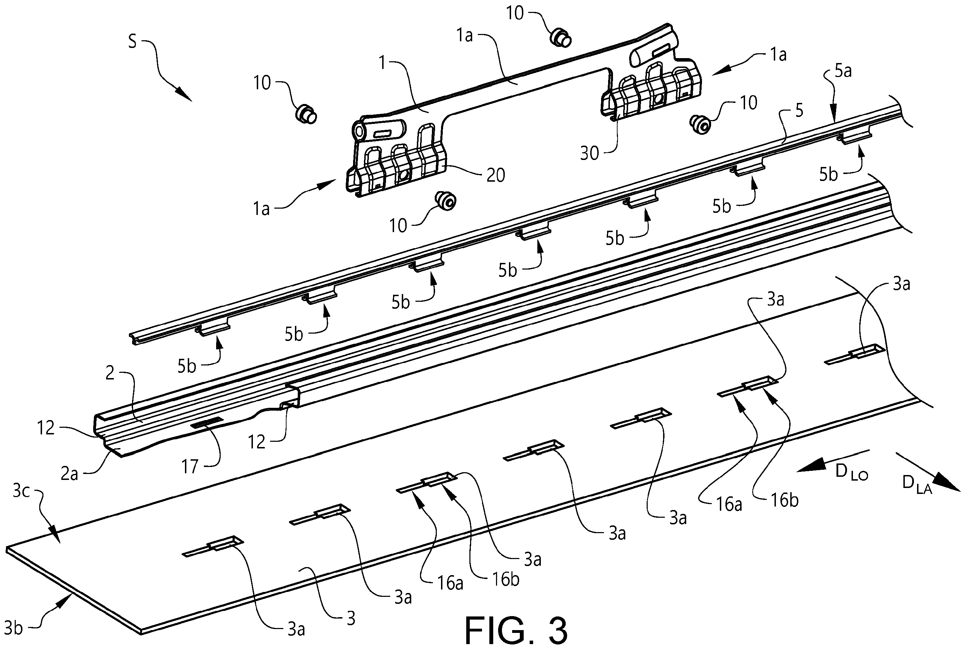

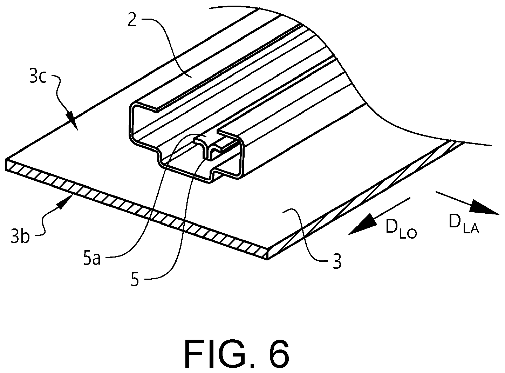

The seat rail system S further comprises an elongated load member 5 attached to the lower rail 2, as shown in for example figures 3 and 6. The load member 5 comprises an upper part 5a and one or more lower parts 5b. In the illustrated embodiment the upper part 5a is extending along the length of the load member 5, and a plurality of lower parts 5b are arranged in connection to the upper part 5a in a spaced apart configuration, as understood from for example figure 3. The upper part 5a of the load member 5 has an upper T-shaped cross-sectional configuration with a laterally extending upper flange 6a, as shown in figures 3, 5a-b, and 6, where the upper flange 6a is configured for being in engagement with a lower portion 20a of the front rail structure 20 and a lower portion 30a of the rear rail structure 30 in a vehicle impact event.

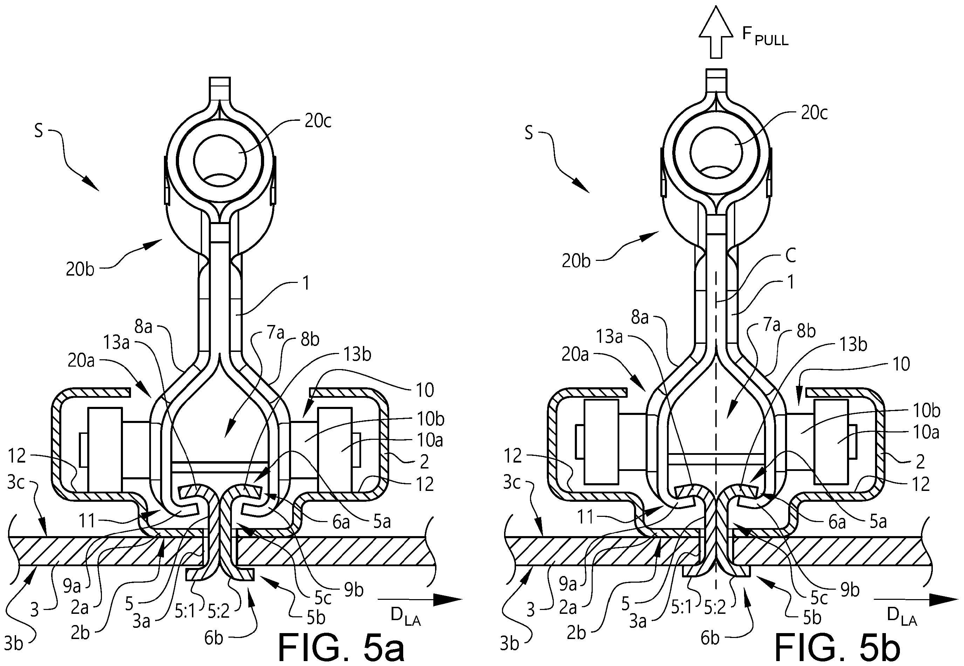

The one or more lower parts 5b of the load member 5 have lower T-shaped cross-sectional configurations with a laterally extending lower flange 6b, as shown in figures 3, 5a-b, and 8, where the lower flange 6b is configured for being in engagement with the floor structure 3 in the vehicle impact event. A web section 5c of the load member 5 is connecting the upper flange 6a and the lower flange 6b. With a T-shaped cross-sectional configuration is meant a cross-sectional shape having a T-shape, or a shape similar to a T-shape such as the double hook like configuration shown in figures 5a-b. The cross-sectional configuration of the load member 5 where the upper parts 5a and the lower parts 5b correspond to each other is similar to an I-beam structure, or similar to an I-beam like structure, as shown in figures 5a-b.

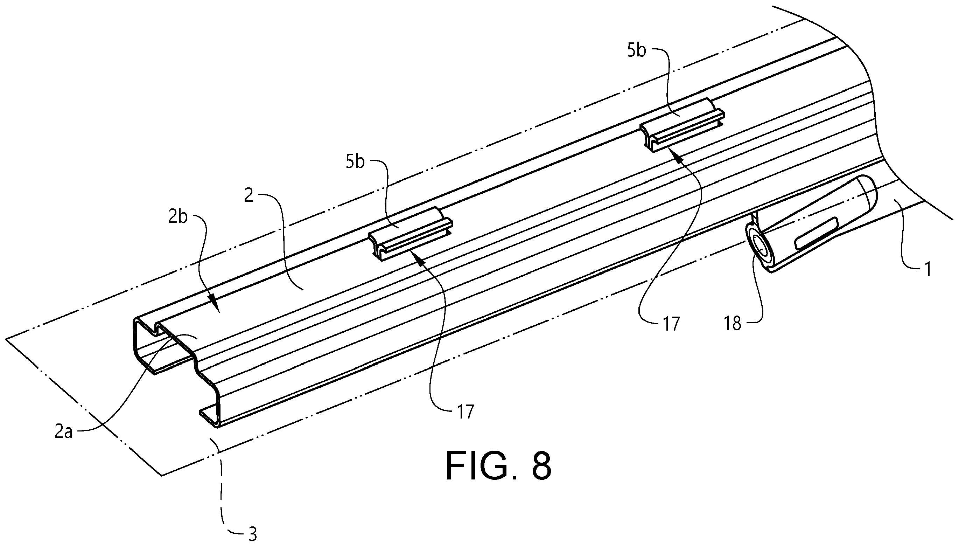

As shown in figure 8, a lower section 2a of the lower rail 2 is arranged with a plurality rail openings 17 arranged for receiving the plurality of lower parts 5b. The lower parts 5b are suitably positioned through corresponding rail openings 17 when mounting the load member 5 to the lower rail 2, and thereafter the lower parts 5b could be bent into the lower T-shaped cross-sectional configurations, as understood from figure 8. In this way, the one or more lower parts 5b of the load member 5 are extending through the lower section 2a of the lower rail 2. The load member 5 and the lower rail 2 are made of suitable materials having high strength, as for example high-strength steel, polymers, composite materials, or other suitable materials or combinations of materials. The load member 5 is attached to the lower rail 2 with suitable fastening means, such as for example welds, glue, rivets, or screw fasteners.

In the illustrated embodiment, the load member 5 comprises two joined material sections 5:1,5:2 forming the upper and lower T-shaped cross-sectional configurations with the web section 5c in-between. The material sections 5:1,5:2 each at least partly has a U-shape, or U-shape like, cross-sectional configuration, as shown in figures 5a-b. This construction with the two joined material sections may simplify the mounting or assembling of the load member 5 to the lower rail 2, since each of the sections can be positioned into the rail openings 17 and thereafter attached to each other and to the lower rail 2.

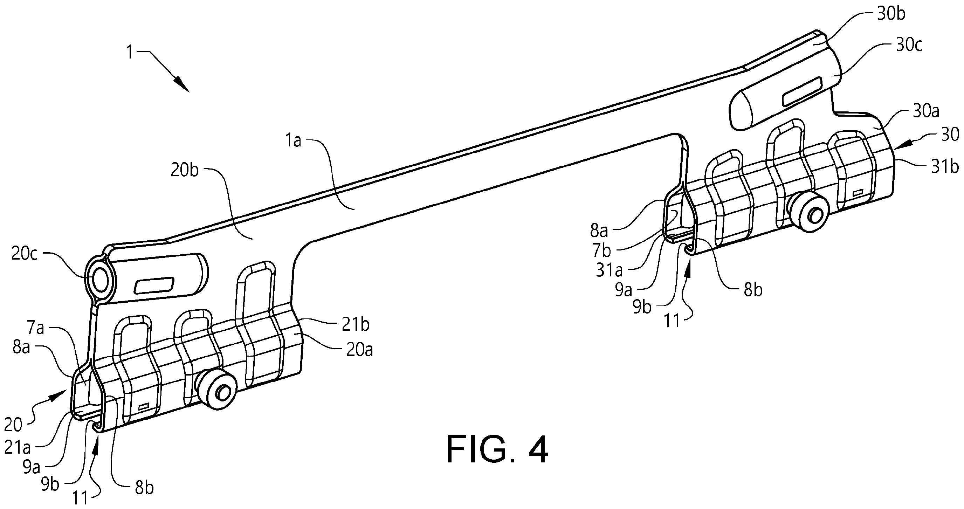

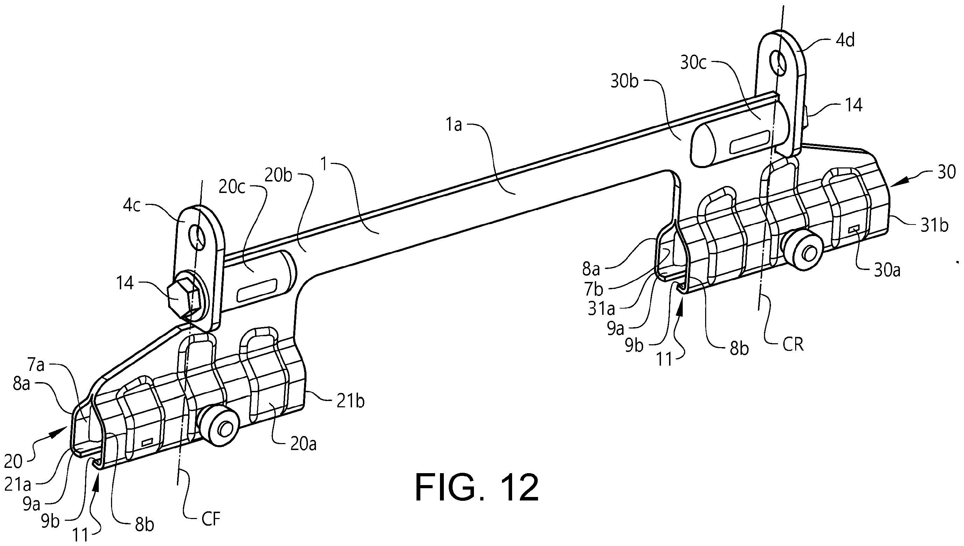

In an assembled state of the seat rail system S, as shown in for example figures 5a-b, the upper part 5a of the load member 5 is extending into the lower portion 20a of the front rail structure 20 of the upper rail 1 and into the lower portion 30a of the rear rail structure 30 of the upper rail 1. The upper rail 1 further comprises an intermediate structure 1a, and the intermediate structure 1a is arranged between and connected to the front rail structure 20 and the rear rail structure 30. The front rail structure 20 and the rear rail structure 30 are arranged at a distance from each other in the longitudinal vehicle direction D_{LO} and connected to each other with the intermediate structure 1a for forming the upper rail 1 as an integrated structure. The distance between front rail structure 20 and the rear rail structure 30 may be varied for different vehicle seat constructions and seat rail system configurations. In the assembled state of the seat rail system S, as shown in for example figures 2 and 11a-b, the intermediate structure 1a is arranged above the load member 5. As understood from for example figures 4 and 12, the upper rail 1 is with the lower portion 20a of the front rail structure 20 and the lower portion 30a of the rear rail structure 30 thus sectioned into two structural parts that are receiving the upper part 5a of the load member 5. The intermediate structure 1a is connecting the lower portions for forming the structure of the upper rail 1. The intermediate structure 1a may be arranged as a less robust structure compared to the front rail structure 20 and the rear rail structure 30, for a more lightweight construction, since the front rail structure 20 and the rear rail structure 30 are designed and configured for withstanding loads in a vehicle impact event for a safe construction of the seat rail system S, as will be further described below.

The upper rail 1 is further provided with fastening portions for attaching the vehicle seat 4 to the upper rail 1. The front rail structure 20 of the upper rail 1 comprises an upper portion 20b, as shown in for example figures 4, 5 and 12. The upper portion 20b comprises a front fastening portion 20c configured for attaching a front part 4a of the vehicle seat 4 to the front rail structure 20. The rear rail structure 30 of the upper rail 1 comprises an upper portion 30b as shown in for example figures 4 and 12. The upper portion 30b comprises a rear fastening portion 30c configured for attaching a rear part 4b of the vehicle seat 4 to the rear rail structure 30. The respective fastening portions may suitably be arranged as openings that are provided with threads for receiving a threaded fastening element 14 for attaching the vehicle seat 4 to the upper rail 1. The vehicle seat 4 may be arranged with brackets or similar structures for the attachment to the upper rail 1 and engagement with the fastening element 14. Other suitable types of fastening elements 14 may also be used. In the embodiment illustrated in figure 12, a front fastening bracket 4c for connecting the front part 4a of the vehicle seat 4 to the front fastening portion 20c of the upper rail 1 is schematically shown, and a rear fastening bracket 4d for connecting the rear part 4b of the vehicle seat 4 to the rear fastening portion 30c of the upper rail 1 is schematically shown. The respective fastening brackets may have any suitable shape and configuration and may be arranged as separate structural elements, as understood from figure 12, or alternatively be arranged as structural elements integrated in the vehicle seat 4.

As shown in figures 5a-b, the one or more lower parts 5b of the load member 5 are extending through the floor structure 3 through corresponding openings 3a of the floor structure 3. The positions of the openings 3a are coinciding with the spacing of the lower parts 5b along the load member 5, as understood from figures 3 and 8. The openings 3a have narrowing configurations, and the openings 3a are tapering in the longitudinal vehicle direction D_{LO}. Suitable narrowing shapes are for example keyhole like shapes as illustrated in figure 3. However, any suitable narrowing shape may be used. The openings 3a in the illustrated embodiment are provided with narrow sections 16a and wide sections 16b.

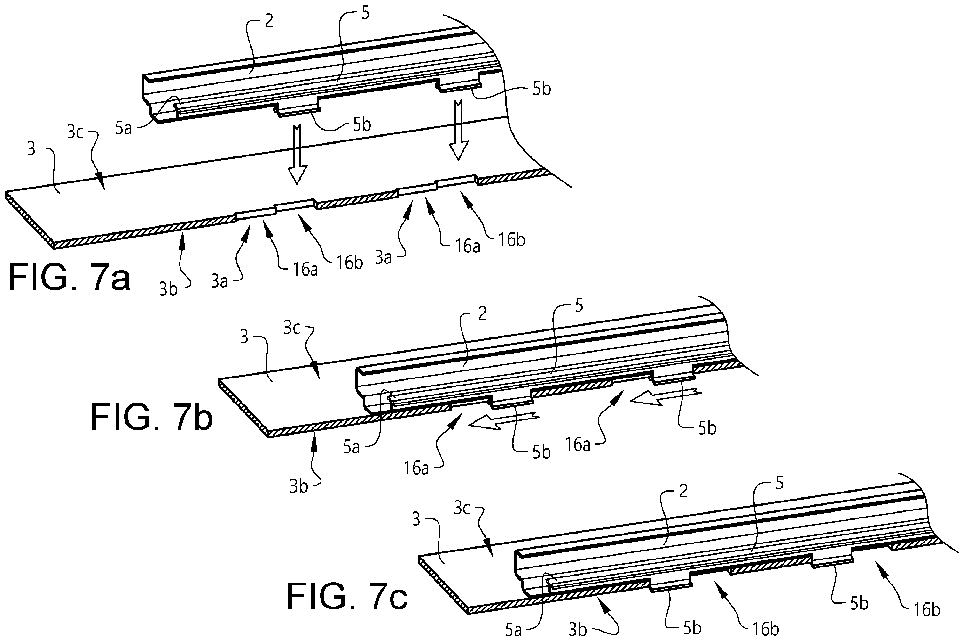

The wide sections 16b of the openings 3a have suitable sizes for receiving the lower parts 5b, and the lower parts 5b with the lower flange 6b are inserted into the wide sections 16b when mounting the lower rail 2 with the load member 5 to the floor structure 3, as illustrated in figure 7a. The lower parts 5a are entering the wide sections 16b in a downwards movement of the lower rail 2, as indicated with arrows in figure 7a. When inserted into the openings 3a, the lower parts 5b are extending through the floor structure 3 and the lower flanges 6b are positioned below the floor structure 3, as illustrated in figure 7b. To complete the mounting of the lower rail 2 to the floor structure 3, the lower rail 2 is after insertion into the wide sections 16b pushed in a direction towards the narrow sections 16a, as indicated with arrows in figure 7b. By pushing the lower rail 2 in the direction towards the narrow sections 16a, the lower flanges 6b will be positioned below the floor structure 3 into a final mounting position, as shown in figure 7c. When the lower flanges 6b are positioned below the floor structure 3 within the narrow sections 16a, the lower rail 2 is prevented from being displaced in an upwards direction due to engagement between the lower flanges 6b and a lower surface 3b of the floor structure 3, as understood from figures 5a-b. The second rail 2 may be further attached to the floor structure 3 via the non-illustrated additional brackets, as described above. When the lower rail 2 is attached to the floor structure 3, the upper rail 1 and the vehicle seat 4 may be mounted to the lower rail 2.

The lower portion 20a of the front rail structure 20 suitably has a bell-shaped cross-sectional configuration, or a bell-shape like cross-sectional configuration, and the lower portion 20a is with this configuration formed with a front cavity 7a, as shown in for example figures 4, 5a-b, and 12. The front cavity 7a is configured for embracing the upper flange 6a of the load member 5. The lower portion 30a of the rear rail structure 30 suitably has a bell-shaped cross-sectional configuration, or a bell-shape like cross-sectional configuration, and the lower portion 30a is with this configuration formed with a rear cavity 7b, as shown in for example figures 4 and 12. The rear cavity 7b is configured for embracing the upper flange 6a of the load member 5, in the same way as the front cavity 7a.

The upper rail 1 comprises a first side section 8a and a second side section 8b. The side sections are suitably joined to each other with appropriate fastening means, and the side sections are together forming the upper rail 1. The upper rail 1 may for example be made of two welded sheets that are forming the bell-shaped lower portions, the upper portions, and the intermediate portion. The welded sheets are forming lateral sides of the upper rail 1. The first cavity 7a and the second cavity 7b are formed between the first side section 8a and the second side section 8b, as shown in for example figures 4, 5a-b, and 12. Other suitable materials that may be used are light alloys and polymeric materials for a lightweight construction of the upper rail 1.

As described above, the upper rail 1 comprises the first side section 8a and the second side section 8b joined to each other, where the front cavity 7a and the rear cavity 7b are formed between the first side section 8a and the second side section 8b. The part of the first side section 8a forming the front cavity 7a comprises a lateral inwardly projecting first flange 9a and the part of the second side section 8b forming the front cavity 7a comprises a lateral inwardly projecting second flange 9b, as shown in for example figures 4, 5a-b, and 12. The part of the first side section 8a forming the rear cavity 7b comprises a lateral inwardly projecting first flange 9a and the part of the second side section 8b forming the rear cavity 7b comprises a lateral inwardly projecting second flange 9b, as shown in for example figures 4 and 12. The rear rail structure 30 with the rear cavity 7b and flanges have the same cross-sectional configuration as the front rail structure 20 shown in figures 5a-b, and the respective first flanges 9a and second flanges 9b are arranged below the upper flange 6a of the load member 5 and configured for being in engagement with the upper flange 6a in the vehicle impact event. The first flanges 9a and the second flanges 9b are forming the lower ends 11 of the lower portion 20a of the front rail structure 20 and lower portion 30a of the rear rail structure 30. As exemplified in figures 5a-b, the first flanges 9a and the second flanges 9b are arranged below the upper flange 6a, and with this configuration, the first flanges 9a and the second flanges 9b are extending in inwards directions towards the load member 5. The first side section 8a and the second side section 8b are together with the first flanges 9a and the second flanges 9b forming the front cavity 7a and rear cavity 7b, which are embracing the upper flange 6a of the load member 5.

The upper flange 6a comprises a first flange section 13a and a second flange section 13b, which are extending laterally on opposite sides of the web section 5c, as shown in figures 5a-b. The first flanges 9a are arranged below the first flange section 13a and the second flanges 9b are arranged below the second flange section 13b. In the illustrated embodiment, the first flanges 9a are extending inwards towards the load member 5 from the first side section 8a with an upwards inclined configuration, and the second flanges 9b are extending inwards towards the load member 5 from the second side section 8b with an upwards inclined configuration. The first flange section 13a is extending outwards towards the first side section 8a from the web section 5c with a downwards inclined configuration, and the second flange section 13b is extending outwards towards the second side section 8b from the web section 5c with a downwards inclined configuration. The first flange section 13a has suitably an extension parallel to, or essentially parallel to, the extensions of the first flanges 9a, and the second flange section 13b has suitably an extension parallel to, or essentially parallel to, the extension of the second flanges 9b.

The load member 5 is configured for being directly in engagement with the floor structure 3 and with at least one of the lower portion 20a of the front rail structure 20 and lower portion 30a of the rear rail structure 30 upon an impacting force in the longitudinal vehicle direction D_{LO} in a vehicle impact event for establishing a load path from the floor structure 3 to the upper rail 1 via the load member 5. With a vehicle impact event is meant any situation where the vehicle V is exposed to impact forces, such as when the vehicle V is hitting an object or an object is hitting the vehicle V. Typical vehicle impact events are when the vehicle V is involved in a crash situation or collision, for example with another vehicle, or if the vehicle V leaves a roadway in a run-off-road collision or similar event. If the vehicle V is involved in a collision, impact forces will act on the vehicle seat 4 and the seat rail system S.

In a rear-end collision, or in a collision where the rear end of the vehicle V runs into an object, the front part of the upper rail 1 is pulled in a direction upwards away from the second rail 2 by a pulling force F_{PULL} and the rear part of the upper rail 1 is pushed downwards towards the second rail 2 by a pushing force F_{PUSH}, due to impacting forces in the longitudinal vehicle direction D_{LO} in such a vehicle impact event acting on the vehicle seat 4 and causing a rotational movement of the vehicle seat 4. The pushing force F_{PUSH} and the pulling force F_{PULL} acting on the seat rail system S in a rear-end collision are schematically illustrated in figures 2 and 11a.

In a head-on collision, or in a collision where the front end of the vehicle V runs into an object, the front rail structure 20 of the upper rail 1 is pushed downwards towards the second rail 2 by a pushing force F_{PUSH} and the rear rail structure 30 of the upper rail 1 is pulled in a direction upwards away from the second rail 2 by a pulling force F_{PULL}, due to impacting forces in the longitudinal vehicle direction D_{LO} in such a vehicle impact event acting on the vehicle seat 4 and causing a rotational movement of the vehicle seat 4. The pushing force F_{PUSH} and the pulling force F_{PULL} acting on the seat rail system S in a head-on collision are schematically illustrated in figure 11b.

The strength of the seat rail system S is critical when a pulling force F_{PULL} is acting on the upper rail 1, such as in the vehicle impact events described above. The pulling force F_{PULL} is illustrated with an arrow in figure 5b, indicating that a part of the upper rail 1, such as the front rail structure 20 or the rear rail structure 30, is pulled in a direction upwards away from the second rail 2. When the pulling force F_{PULL} is acting on a part of the seat rail system S, the load member 5 has the function to directly engage the floor structure 3 and directly engage the upper rail 1. In this way, the floor structure 3 is connected to the upper rail 1 via the load member 5 for establishing the load path from the floor structure 3 to the upper rail 1 via the load member 5. The load member 5 is establishing a strong and robust construction of the seat rail system S that is preventing large and unwanted deformations of the rails. With the system configuration, the load member 5 is directly in engagement with both the floor structure 3 and the lower portion 20a of the front rail structure 20 or the lower portion 30a of the rear rail structure 30 in the vehicle impact event. The established load path in the vehicle impact event from the floor structure 3 to the upper rail 1 via the load member 5, is through the engagement of the load member 5 following a centre line C of seat rail system S from the floor structure 3 to the upper rail for establishing a short load path compared to traditional systems, as indicated in figure 5b.

The pushing force F_{PUSH} is in the vehicle impact event absorbed through interaction between the upper rail 1, the lower rail 2, and the floor structure 3, when the vehicle seat 4 is pushed towards the floor structure 3. The upper rail 1 and the lower rail 2 may be deformed to a certain degree when exerted to high pushing forces.

More specifically, the upper flange 6a is configured for being in engagement with the lower portion 20a of the front rail structure 20 and lower portion 30a of the rear rail structure 30 in the vehicle impact event. The first flanges 9a are configured for engaging the first flange section 13a in the vehicle impact event, and the second flanges 9b are configured for engaging the second flange section 13b in the vehicle impact event for a strong connection between the upper rail 1 and the load member 5. In this way, the first flanges 9a and the second flanges 9b are configured for being in engagement with the upper flange 6a. As exemplified in figure 5b, the parts involved are arranged as hook-like elements that are interacting with each other in the vehicle impact event, preventing that the upper rail 1 is separated from the lower rail 2 due to the connection of the load member 5 to the lower portion 1a. In the vehicle impact event, the upper rail 1 is pulled a small distance upwards away from the lower rail 2 due to minimal play between parts involved. As exemplified in figure 5a, there is a small play between the upper flange 6a and the respective first flanges 9a and the second flanges 9b in normal operating conditions, which is allowing the movement of the upper rail 1 in relation to the lower rail 2 in the longitudinal vehicle direction D_{LO} for the positioning of the vehicle seat 4 relative to the floor structure 3.

In a similar way, the one or more lower parts 5b of the load member 5 are configured for being in engagement with the lower surface 3b of the floor structure 3 in the vehicle impact event. The lower flanges 6b are engaging the lower surface 3b of the floor structure 3 in the vehicle impact event for a strong connection between the floor structure 3 and the load member 5. As understood from figure 5b, the lower flanges 6b are interacting with the floor structure 3 preventing that the lower rail 2 is separated from the floor structure 3. As exemplified in figure 5b, the lower flanges 6b of the lower parts 5b are arranged as hook-like elements that are interacting with the floor structure 3 in the vehicle impact event, preventing that the lower rail 2 is separated from the floor structure 3 due to the connection of the load member 5 to the floor structure 3. In the vehicle impact event, the lower rail 2 may be pulled a small distance upwards away from the floor structure 3 due to a small play between the lower flange 6b and the lower surface 3b of the floor structure 3. The small play between the lower flange 6a and the lower surface 3b of the floor structure 3 in normal operating conditions is allowing the mounting of the upper rail 2 to the floor structure, as described above.

The construction of the seat rail system S is providing a straight symmetrical load path all the way from the floor structure 3 to the vehicle seat via the upper rail 1, allowing a compact construction of the system with low height and low weight.

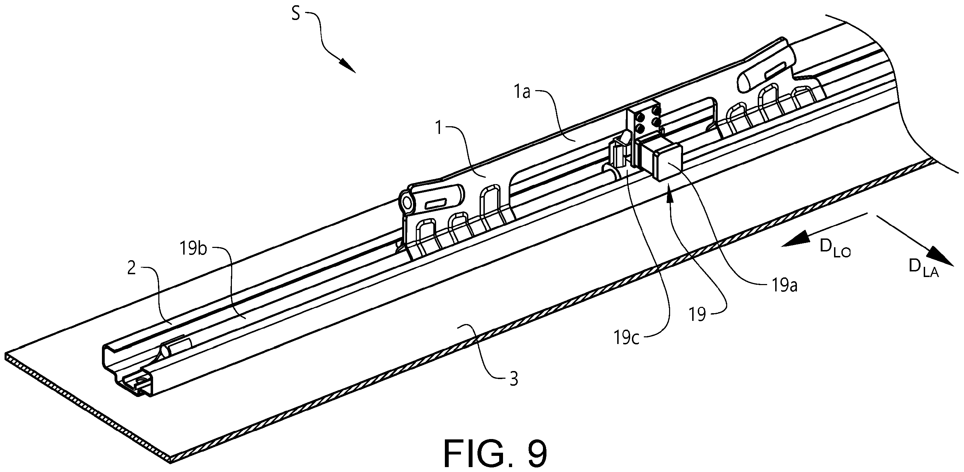

As illustrated in figure 9, the seat rail system S may further be provided with a drive mechanism 19 for positioning the upper rail 1 in relation to the lower rail 2. The drive mechanism 19 is suitably connected to the intermediate portion 1a of the upper rail 1, and may comprise an electric motor 19a and be configured as a worm drive mechanism. The worm drive mechanism may comprise an elongated threaded rod 19b connected to the lower rail 2 that is interacting with a worm gear 19c arranged on the upper rail 1. It should be understood that the drive mechanism 19 could have other suitable constructions, such as for example a linear actuator or ball screw mechanism.

The upper rail 1 may be configured in different ways, and suitably the front fastening portion 20c is positioned in the longitudinal vehicle direction D_{LO} between a front end 21a and a rear end 21b of the lower portion 20a of the front rail structure 20, and/or the rear fastening portion 30c is positioned in the longitudinal vehicle direction D_{LO} between a front end 31a and a rear end 31b of the lower portion 30a of the rear rail structure 30. In the embodiment illustrated in figures 1-9 and best shown in figure 4, the rear fastening portion 30c is positioned forward of the rear end 31b of the lower portion 30a of the rear rail structure 30 for an efficient load distribution in a vehicle impact event where a pulling force is acting on the rear rail structure. With this configuration, the lower portion 30a of the rear rail structure will deform more evenly in the vehicle impact event for an efficient load distribution between the front end 31a and the rear end 31b.

An alternative embodiment of the seat rail system S is shown in figures 10, 11a-b, and 12. In this embodiment, the upper rail has a different configuration. Other parts of the seat rail system S may have the same design and configuration as described in the embodiment above. As shown in the figures, the front fastening portion 20c is centrally positioned in the front rail structure 20 in the longitudinal vehicle direction D_{LO} between the front end 21a and the rear end 21b. The central positioning of the front fastening portion 20c is enabling a load distribution over the length of the lower portion 20a in the longitudinal vehicle direction D_{LO} between the front end 21a and the rear end 21b in the vehicle impact event, as indicated with the small arrows in figures 11a-b. With central positioning is meant that the front fastening portion 20c in the longitudinal vehicle direction D_{LO} is positioned at or close to a front centre line CF of the front rail structure 20, as shown in figures 11a-b. The front centre line CF is dividing the lower portion 20a of the front rail structure 20 in equal or essentially equal extensions in the longitudinal vehicle direction D_{LO} between the front end 21a and the rear end 21b. This configuration is minimizing deformation of the front rail structure 20 in the vehicle impact event for an efficient load distribution. The lower portion 20a of the front rail structure 20 is with this configuration efficiently gripping the load member 5 along the full length in the longitudinal vehicle direction D_{LO} in the vehicle impact event when the pulling force F_{PULL} is exerted onto the front rail structure 20.

In the embodiment illustrated in figures 10, 11a-b, and 12, the rear fastening portion 30c is centrally positioned in the rear rail structure 30 in the longitudinal vehicle direction D_{LO} between the front end 31a and the rear end 31b. The central positioning of the rear fastening portion 30c is enabling a load distribution over the length of the lower portion 30a in the longitudinal vehicle direction D_{LO} between the front end 31a and the rear end 31b in the vehicle impact event, as indicated with the small arrows in figures 11a-b. With central positioning is meant that the rear fastening portion 30c in the longitudinal vehicle direction D_{LO} is positioned at or close to a rear centre line CR of the rear rail structure 30, as shown in figures 1 1a-b. The rear centre line CR is dividing the lower portion 30a of the rear rail structure 30 in equal or essentially equal extensions in the longitudinal vehicle direction D_{LO} between the front end 31a and the rear end 31b. This configuration is minimizing deformation of the rear rail structure 30 in the vehicle impact event for an efficient load distribution. The lower portion 30a of the rear rail structure 30 is with this configuration efficiently gripping the load member 5 along the full length in the longitudinal vehicle direction D_{LO} in the vehicle impact event when the pulling force F_{PULL} is exerted onto the rear rail structure 30.

For all embodiments, the seat rail system S may further comprise laterally extending bearing structures 10, as shown in for example figures 3 and 5a-b. The bearing structures 10 are attached to the upper rail 1, and the bearing structures 10 are extending laterally in opposite directions from the upper rail 1. The bearing structures 10 may be arranged pairwise on opposite sides of the upper rail. The bearing structures 10 are configured for movably engaging the lower rail 2 and for providing a low-friction engagement between the upper rail 1 and the lower rail 2. The bearing structures 10 comprise bearings 10a, and the bearings 10a are suitably connected to the upper rail 1 via extending shaft structures 10b or similar arrangements for lateral positioning of the bearings 10a in relation to the lower rail 2.

The lower rail 2 comprises two bearing surfaces 12 laterally arranged on opposite sides of the load member 5, as shown in for example figures 5a-b. The bearings 10a and the bearing surfaces 12 are configured for interacting with each other when the upper rail 1 is displaced in relation to the lower rail 2. In the embodiment illustrated in figures 3 and 4, the first rail 1 comprises two pairs of bearing structures 10 arranged for interacting with the bearing surfaces 12. However, any suitable number of bearing structures 10 may be used. The bearings 10a may for example be roller bearings and the roller bearings may be provided with wheel elements or similar structures for rolling interaction with the bearing surfaces 12 upon longitudinal displacement of the upper rail 1 in relation to the lower rail 2. The bearings 10a may alternatively be sliding bearings for sliding interaction with the bearing surfaces 12 upon longitudinal displacement of the upper rail 1 in relation to the lower rail 2. Other types of bearings may also be used depending on the construction and design of the system. The bearing structures 10 are as illustrated in figures 4, 5a-b, and 12, positioned above lower ends 11 of the lower portion 20a of the front rail structure 20 and the lower portion 30a of the rear rail structure 30 for a compact and robust construction of the seat rail system S. The bearing structures 10 and the bearing surfaces 12 may further support the absorption of the pushing force F_{PUSH} in a vehicle impact event through interaction between the upper rail 1 and the lower rail 2, when the vehicle seat 4 is pushed towards the floor structure 3.

Reference signs mentioned in the claims should not be seen as limiting the extent of the matter protected by the claims, and their sole function is to make claims easier to understand.

### REFERENCE SIGNS

- 1:: Upper rail
- 1a:: Intermediate structure
- 2:: Lower rail
- 2a:: Lower section
- 2b:: Lower base surface
- 3:: Floor structure
- 3a:: Opening
- 3b:: Lower surface
- 3c:: Upper surface
- 4:: Vehicle seat
- 4a:: Front part
- 4b:: Rear part
- 4c:: Front fastening bracket
- 4d:: Rear fastening bracket
- 5:: Load member
- 5a:: Upper part
- 5b:: Lower part
- 6a:: Upper flange
- 6b:: Lower flange
- 7a:: Front cavity
- 7b:: Rear cavity
- 8a:: First side section
- 8b:: Second side section
- 9a:: First flange
- 9b:: Second flange
- 10:: Bearing structure
- 10a:: Bearing
- 11:: Lower end
- 12:: Bearing surface
- 14:: Fastening element
- 20:: Front rail structure
- 20a:: Lower portion
- 20b:: Upper portion
- 20c:: Front fastening portion
- 21a:: Front end
- 21b:: Rear end
- 30:: Rear rail structure
- 30a:: Lower portion
- 30b:: Upper portion
- 30c:: Rear fastening portion
- 31a:: Front end
- 31b:: Rear end

- C:: Centre line
- CF:: Front centre line
- CR:: Rear centre line
- S:: Seat rail system
- V:: Vehicle

## Claims

1. A seat rail system (S) for a vehicle (V), wherein the seat rail system (S) comprises an upper rail (1) and a stationary lower rail (2) attachable to a floor structure (3) of the vehicle (V), wherein the upper rail (1) is configured for being attached to a vehicle seat (4) and movably arranged in relation to the lower rail (2) in a longitudinal vehicle direction (D_{LO}), wherein the seat rail system (S) further comprises an elongated load member (5) attached to the lower rail (2),
**characterized in that** the load member (5) is extending through the floor structure (3), wherein the upper rail (1) comprises a front rail structure (20) and a rear rail structure (30), wherein the load member (5) is extending into a lower portion (20a) of the front rail structure (20) and into a lower portion (30a) of the rear rail structure (30).

2. The seat rail system (S) according to claim 1,
**characterized in that** one or more lower parts (5b) of the load member (5) are extending though corresponding openings (3a) of the floor structure (3), wherein an upper part (5a) of the load member (5) is extending into the lower portion (20a) of the front rail structure (20) and into the lower portion (30a) of the rear rail structure (30); wherein the load member (5) is configured for being directly in engagement with the floor structure (3) and at least one of the lower portions (20a,20b) of the front rail structure (20) and the rear rail structure (30) upon an impacting force in the longitudinal vehicle direction (D_{LO}) in a vehicle impact event for establishing a load path from the floor structure (3) to the upper rail (1) via the load member (5).

3. The seat rail system (S) according to claim 2,
**characterized in that** the one or more lower parts (5b) of the load member (5) are configured for being in engagement with a lower surface (3b) of the floor structure (3) in the vehicle impact event.

4. The seat rail system (S) according to claim 2 or 3,
**characterized in that** the one or more lower parts (5b) of the load member (5) are extending through a lower section (2a) of the lower rail (2).

5. The seat rail system (S) according to any of claims 2 to 4,
**characterized in that** the one or more lower parts (5b) of the load member (5) have lower T-shaped cross-sectional configurations with a laterally extending lower flange (6b), wherein the lower flange (6b) is configured for being in engagement with the floor structure (3) in the vehicle impact event.

6. The seat rail system (S) according to any of claims 2 to 5,
**characterized in that** the upper part (5a) of the load member (5) has an upper T-shaped cross-sectional configuration with a laterally extending upper flange (6a), wherein the upper flange (6a) is configured for being in engagement with the lower portion (20a) of the front rail structure (20) and the lower portion (30a) of the rear rail structure (30) in the vehicle impact event.

7. The seat rail system (S) according to claim 6,
**characterized in that** the lower portion (20a) of the front rail structure (20) has a bell-shaped cross-sectional configuration forming a front cavity (7a) configured for embracing the upper flange (6a), and wherein the lower portion (30a) of the rear rail structure (30) has a bell-shaped cross-sectional configuration forming a rear cavity (7b) configured for embracing the upper flange (6a).

8. The seat rail system (S) according to claim 7,
**characterized in that** the upper rail (1) comprises a first side section (8a) and a second side section (8b) joined to each other, wherein the front cavity (7a) and the rear cavity (7b) are formed between the first side section (8a) and the second side section (8b), wherein the first side section (8a) forming the front cavity (7a) comprises a lateral inwardly projecting first flange (9a) and the second side section (8b) forming the front cavity (7a) comprises a lateral inwardly projecting second flange (9b), wherein the first side section (8a) forming the rear cavity (7b) comprises a lateral inwardly projecting first flange (9a) and the second side section (8b) forming the rear cavity (7b) comprises a lateral inwardly projecting second flange (9b), wherein the first flanges (9a) and the second flanges (9b) are arranged below the upper flange (6a) and configured for being in engagement with the upper flange (6a) in the vehicle impact event.

9. The seat rail system (S) according to any preceding claim,
**characterized in that** the front rail structure (20) comprises an upper portion (20b), wherein the upper portion (20b) comprises a front fastening portion (20c) configured for attaching a front part (4a) of the vehicle seat (4) to the front rail structure (20); wherein the rear rail structure (30) comprises an upper portion (30b), wherein the upper portion (30b) comprises a rear fastening portion (30c) configured for attaching a rear part (4b) of the vehicle seat 4 to the rear rail structure (30).

10. The seat rail system (S) according to claim 9,
**characterized in that** the front fastening portion (20c) is positioned in the longitudinal vehicle direction (D_{LO}) between a front end (21a) and a rear end (21b) of the lower portion (20a) of the front rail structure (20); and/or wherein the rear fastening portion (30c) is positioned in the longitudinal vehicle direction (D_{LO}) between a front end (31a) and a rear end (31b) of the lower portion (30a) of the rear rail structure (30).

11. The seat rail system (S) according to claim 10,
**characterized in that** the front fastening portion (20c) is centrally positioned in the front rail structure (20) in the longitudinal vehicle direction (D_{LO}) between the front end (21a) and the rear end (21b), wherein the central positioning is enabling a load distribution over the length of the lower portion (20a) in the longitudinal vehicle direction (D_{LO}) between the front end (21a) and the rear end (21b) in the vehicle impact event; and/or wherein the rear fastening portion (30c) is centrally positioned in the rear rail structure (30) in the longitudinal vehicle direction (D_{LO}) between the front end (31a) and the rear end (31b), wherein the central positioning is enabling a load distribution over the length of the lower portion (30a) in the longitudinal vehicle direction (D_{LO}) between the front end (31a) and the rear end (31b) in the vehicle impact event.

12. The seat rail system (S) according to any preceding claim,
**characterized in that** the upper rail (1) further comprises an intermediate structure (1a) arranged between and connected to the front rail structure (20) and the rear rail structure (30), wherein the intermediate structure is arranged above the load member (5).

13. The seat rail system (S) according to any preceding claim,
**characterized in that** the seat rail system (S) further comprises laterally extending bearing structures (10), wherein the bearing structures (10) are attached to the upper rail (1) and extending in opposite directions from the upper rail (1), wherein the bearing structures (10) are configured for movably engaging the lower rail (2).

14. The seat rail system (S) according to claim 13,
**characterized in that** the bearing structures (10) comprise bearings (10a), wherein the lower rail (2) comprises bearing surfaces (12) laterally arranged on opposite sides of the load member (5), wherein the bearings (10a) and the bearing surfaces (12) are configured for interacting with each other when the upper rail (1) is displaced in relation to the lower rail (2).

15. A vehicle (V) comprising the seat rail system (S) according to any of claims 1-14.

## Patentansprüche

1. Sitzschienensystem (S) für ein Fahrzeug (V), wobei das Sitzschienensystem (S) eine obere Schiene (1) und eine stationäre untere Schiene (2) umfasst, die an einer Bodenstruktur (3) des Fahrzeugs (V) befestigbar ist, wobei die obere Schiene (1) dazu konfiguriert ist, an einem Fahrzeugsitz (4) befestigt zu werden, und bewegbar in Bezug auf die untere Schiene (2) in einer Fahrzeuglängsrichtung (D_{LO}) angeordnet ist, wobei das Sitzschienensystem (S) ferner ein längliches Lastelement (5) umfasst, das an der unteren Schiene (2) befestigt ist,
**dadurch gekennzeichnet, dass** sich das Lastelement (5) durch die Bodenstruktur (3) erstreckt, wobei die obere Schiene (1) eine vordere Schienenstruktur (20) und eine hintere Schienenstruktur (30) umfasst, wobei sich das Lastelement (5) in einen unteren Abschnitt (20a) der vorderen Schienenstruktur (20) und in einen unteren Abschnitt (30a) der hinteren Schienenstruktur (30) erstreckt.

2. Sitzschienensystem (S) nach Anspruch 1,
**dadurch gekennzeichnet, dass** sich ein oder mehrere untere Teile (5b) des Lastelements (5) durch entsprechende Öffnungen (3a) der Bodenstruktur (3) erstrecken, wobei sich ein oberer Teil (5a) des Lastelements (5) in den unteren Abschnitt (20a) der vorderen Schienenstruktur (20) und in den unteren Abschnitt (30a) der hinteren Schienenstruktur (30) erstreckt; wobei das Lastelement (5) dazu konfiguriert ist, bei einer Aufprallkraft in der Fahrzeuglängsrichtung (D_{LO}) in einem Fahrzeugaufprallereignis mit der Bodenstruktur (3) und mindestens einem der unteren Abschnitte (20a, 20b) der vorderen Schienenstruktur (20) und der hinteren Schienenstruktur (30) unmittelbar in Eingriff zu stehen, um einen Lastpfad von der Bodenstruktur (3) zu der oberen Schiene (1) über das Lastelement (5) herzustellen.

3. Sitzschienensystem (S) nach Anspruch 2,
**dadurch gekennzeichnet, dass** der eine oder die mehreren unteren Teile (5b) des Lastelements (5) dazu konfiguriert sind, in dem Fahrzeugaufprallereignis mit einer unteren Oberfläche (3b) der Bodenstruktur (3) in Eingriff zu stehen.

4. Sitzschienensystem (S) nach Anspruch 2 oder 3,
**dadurch gekennzeichnet, dass** sich der eine oder die mehreren unteren Teile (5b) des Lastelements (5) durch ein unteres Teilstück (2a) der unteren Schiene (2) erstrecken.

5. Sitzschienensystem (S) nach einem der Ansprüche 2 bis 4,
**dadurch gekennzeichnet, dass** der eine oder die mehreren unteren Teile (5b) des Lastelements (5) untere T-förmige Querschnittskonfigurationen mit einem sich seitlich erstreckenden unteren Flansch (6b) aufweisen, wobei der untere Flansch (6b) dazu konfiguriert ist, in dem Fahrzeugaufprallereignis mit der Bodenstruktur (3) in Eingriff zu stehen.

6. Sitzschienensystem (S) nach einem der Ansprüche 2 bis 5,
**dadurch gekennzeichnet, dass** der obere Teil (5a) des Lastelements (5) eine obere T-förmige Querschnittskonfiguration mit einem sich seitlich erstreckenden oberen Flansch (6a) aufweist, wobei der obere Flansch (6a) dazu konfiguriert ist, in dem Fahrzeugaufprallereignis mit dem unteren Abschnitt (20a) der vorderen Schienenstruktur (20) und dem unteren Abschnitt (30a) der hinteren Schienenstruktur (30) in Eingriff zu stehen.

7. Sitzschienensystem (S) nach Anspruch 6,
**dadurch gekennzeichnet, dass** der untere Abschnitt (20a) der vorderen Schienenstruktur (20) eine glockenförmige Querschnittskonfiguration aufweist, die einen vorderen Hohlraum (7a) bildet, der dazu konfiguriert ist, den oberen Flansch (6a) zu umschließen, und wobei der untere Abschnitt (30a) der hinteren Schienenstruktur (30) eine glockenförmige Querschnittskonfiguration aufweist, die einen hinteren Hohlraum (7b) bildet, der dazu konfiguriert ist, den oberen Flansch (6a) zu umschließen.

8. Sitzschienensystem (S) nach Anspruch 7,
**dadurch gekennzeichnet, dass** die obere Schiene (1) ein erstes Seitenteilstück (8a) und ein zweites Seitenteilstück (8b) aufweist, die miteinander verbunden sind, wobei der vordere Hohlraum (7a) und der hintere Hohlraum (7b) zwischen dem ersten Seitenteilstück (8a) und dem zweiten Seitenteilstück (8b) gebildet sind, wobei das erste Seitenteilstück (8a), das der vordere Hohlraum (7a) bildet, einen seitlichen, einwärts vorspringenden ersten Flansch (9a) umfasst und das zweite Seitenteilstück (8b), das der vordere Hohlraum (7a) bildet, einen seitlichen, einwärts vorspringenden zweiten Flansch (9b) umfasst, wobei das erste Seitenteilstück (8a), das der hintere Hohlraum (7b) bildet, einen seitlichen, einwärts vorspringenden ersten Flansch (9a) umfasst und das zweite Seitenteilstück (8b), das der hintere Hohlraum (7b) bildet, einen seitlichen, einwärts vorspringenden zweiten Flansch (9b) umfasst, wobei die ersten Flansche (9a) und die zweiten Flansche (9b) unter dem oberen Flansch (6a) angeordnet und dazu konfiguriert sind, in dem Fahrzeugaufprallereignis mit dem oberen Flansch (6a) in Eingriff zu stehen.

9. Sitzschienensystem (S) nach einem der vorhergehenden Ansprüche,
**dadurch gekennzeichnet, dass** die vordere Schienenstruktur (20) einen oberen Abschnitt (20b) umfasst, wobei der obere Abschnitt (20b) einen vorderen Fixierungsabschnitt (20c) umfasst, der dazu konfiguriert ist, einen vorderen Teil (4a) des Fahrzeugsitzes (4) an der vorderen Schienenstruktur (20) zu befestigen; wobei die hintere Schienenstruktur (30) einen oberen Abschnitt (30b) umfasst, wobei der obere Abschnitt (30b) einen hinteren Fixierungsabschnitt (30c) umfasst, der dazu konfiguriert ist, einen hinteren Teil (4b) des Fahrzeugsitzes (4) an der hinteren Schienenstruktur (30) zu befestigen.

10. Sitzschienensystem (S) nach Anspruch 9,
**dadurch gekennzeichnet, dass** der vordere Fixierungsabschnitt (20c) in der Fahrzeuglängsrichtung (D_{LO}) zwischen einem vorderen Ende (21a) und einem hinteren Ende (21b) des unteren Abschnitts (20a) der vorderen Schienenstruktur (20) positioniert ist; und/oder wobei der hintere Fixierungsabschnitt (30c) in der Fahrzeuglängsrichtung (D_{LO}) zwischen einem vorderen Ende (31a) und einem hinteren Ende (31b) des unteren Abschnitts (30a) der hinteren Schienenstruktur (30) positioniert ist.

11. Sitzschienensystem (S) nach Anspruch 10,
**dadurch gekennzeichnet, dass** der vordere Fixierungsabschnitt (20c) in der vorderen Schienenstruktur (20) in der Fahrzeuglängsrichtung (D_{LO}) zwischen dem vorderen Ende (21a) und dem hinteren Ende (21b) mittig positioniert ist, wobei das mittige Positionieren in dem Fahrzeugaufprallereignis eine Lastverteilung über die Länge des unteren Abschnitts (20a) in der Fahrzeuglängsrichtung (D_{LO}) zwischen dem vorderen Ende (21a) und dem hinteren Ende (21b) ermöglicht; und/oder wobei der hintere Fixierungsabschnitt (30c) in der hinteren Schienenstruktur (30) in der Fahrzeuglängsrichtung (D_{LO}) zwischen dem vorderen Ende (31a) und dem hinteren Ende (31b) mittig positioniert ist, wobei das mittige Positionieren in dem Fahrzeugaufprallereignis eine Lastverteilung über die Länge des unteren Abschnitts (30a) in der Fahrzeuglängsrichtung (D_{LO}) zwischen dem vorderen Ende (31a) und dem hinteren Ende (31b) ermöglicht.

12. Sitzschienensystem (S) nach einem der vorhergehenden Ansprüche,
**dadurch gekennzeichnet, dass** die obere Schiene (1) ferner eine Zwischenstruktur (1a) umfasst, die zwischen der vorderen Schienenstruktur (20) und der hinteren Schienenstruktur (30) angeordnet und mit ihnen verbunden ist, wobei die Zwischenstruktur über dem Lastelement (5) angeordnet ist.

13. Sitzschienensystem (S) nach einem der vorhergehenden Ansprüche,
**dadurch gekennzeichnet, dass** das Sitzschienensystem (S) ferner sich seitlich erstreckende Lagerstrukturen (10) umfasst, wobei die Lagerstrukturen (10) an der oberen Schiene (1) befestigt sind und sich in entgegengesetzten Richtungen von der oberen Schiene (1) erstrecken, wobei die Lagerstrukturen (10) dazu konfiguriert sind, die untere Schiene (2) bewegbar in Eingriff zu nehmen.

14. Sitzschienensystem (S) nach Anspruch 13,
**dadurch gekennzeichnet, dass** die Lagerstrukturen (10) Lager (10a) umfassen, wobei die untere Schiene (2) Lagerflächen (12) umfasst, die an entgegengesetzten Seiten des Lastelements (5) angeordnet sind, wobei die Lager (10a) und die Lagerflächen (12) dazu konfiguriert sind, miteinander zu interagieren, wenn die obere Schiene (1) in Bezug auf die untere Schiene (2) versetzt wird.

15. Fahrzeug (V), umfassend das Sitzschienensystem (S) nach einem der Ansprüche 1-14.

## Revendications

1. Système de rail de siège (S) pour un véhicule (V), dans lequel le système de rail de siège (S) comprend un rail supérieur (1) et un rail inférieur fixe (2) pouvant être fixés à une structure de plancher (3) du véhicule (V), dans lequel le rail supérieur (1) est configuré pour être fixé à un siège de véhicule (4) et agencé de manière mobile par rapport au rail inférieur (2) dans une direction longitudinale de véhicule (D_{LO}), dans lequel le système de rail de siège (S) comprend en outre un élément de charge allongé (5) fixé au rail inférieur (2),
**caractérisé en ce que** l'élément de charge (5) s'étend à travers la structure de plancher (3), dans lequel le rail supérieur (1) comprend une structure de rail avant (20) et une structure de rail arrière (30), dans lequel l'élément de charge (5) s'étend dans une partie inférieure (20a) de la structure de rail avant (20) et dans une partie inférieure (30a) de la structure de rail arrière (30).

2. Système de rail de siège (S) selon la revendication 1,
**caractérisé en ce qu'**une ou plusieurs parties inférieures (5b) de l'élément de charge (5) s'étendent à travers les ouvertures correspondantes (3a) de la structure de plancher (3), dans lequel une partie supérieure (5a) de l'élément de charge (5) s'étend dans la partie inférieure (20a) de la structure de rail avant (20) et dans la partie inférieure (30a) de la structure de rail arrière (30) ; dans lequel l'élément de charge (5) est configuré pour être directement en prise avec la structure de plancher (3) et au moins l'une des parties inférieures (20a, 20b) de la structure de rail avant (20) et de la structure de rail arrière (30) lors d'une force d'impact dans la direction longitudinale de véhicule (D_{LO}) lors d'un événement d'impact de véhicule, pour établir un chemin de charge depuis la structure de plancher (3) jusqu'au rail supérieur (1) via l'élément de charge (5).

3. Système de rail de siège (S) selon la revendication 2,
**caractérisé en ce que** l'une ou plusieurs parties inférieures (5b) de l'élément de charge (5) sont configurées pour être en prise avec une surface inférieure (3b) de la structure de plancher (3) lors de l'événement d'impact de véhicule.

4. Système de rail de siège (S) selon la revendication 2 ou 3,
**caractérisé en ce que** l'une ou plusieurs parties inférieures (5b) de l'élément de charge (5) s'étendent à travers une section inférieure (2a) du rail inférieur (2).

5. Système de rail de siège (S) selon l'une quelconque des revendications 2 à 4,
**caractérisé en ce que** l'une ou plusieurs parties inférieures (5b) de l'élément de charge (5) ont des configurations transversales inférieures en forme de T avec une bride inférieure s'étendant latéralement (6b), dans lequel la bride inférieure (6b) est configurée pour être en prise avec la structure de plancher (3) lors de l'événement d'impact de véhicule.

6. Système de rail de siège (S) selon l'une quelconque des revendications 2 à 5,
**caractérisé en ce que** la partie supérieure (5a) de l'élément de charge (5) a une configuration transversale supérieure en forme de T avec une bride supérieure s'étendant latéralement (6a), dans lequel la bride supérieure (6a) est configurée pour être en prise avec la partie inférieure (20a) de la structure de rail avant (20) et la partie inférieure (30a) de la structure de rail arrière (30) lors de l'événement d'impact de véhicule.

7. Système de rail de siège (S) selon la revendication 6,
**caractérisé en ce que** la partie inférieure (20a) de la structure de rail avant (20) a une configuration transversale en forme de cloche formant une cavité avant (7a) configurée pour embrasser la bride supérieure (6a), et dans lequel la partie inférieure (30a) de la structure de rail arrière (30) a une configuration transversale en forme de cloche formant une cavité arrière (7b) configurée pour embrasser la bride supérieure (6a).

8. Système de rail de siège (S) selon la revendication 7,
**caractérisé en ce que** le rail supérieur (1) comprend une première section latérale (8a) et une seconde section latérale (8b) reliées l'une à l'autre, dans lequel la cavité avant (7a) et la cavité arrière (7b) sont formées entre la première section latérale (8a) et la seconde section latérale (8b), dans lequel la première section latérale (8a) formant la cavité avant (7a) comprend une première bride latérale (9a) faisant saillie vers l'intérieur et la seconde section latérale (8b) formant la cavité avant (7a) comprend une seconde bride latérale (9b) faisant saillie vers l'intérieur, dans lequel la première section latérale (8a) formant la cavité arrière (7b) comprend une première bride latérale (9a) faisant saillie vers l'intérieur et la seconde section latérale (8b) formant la cavité arrière (7b) comprend une seconde bride latérale (9b) faisant saillie vers l'intérieur, dans lequel les premières brides (9a) et les secondes brides (9b) sont agencées sous la bride supérieure (6a) et configurées pour être en prise avec la bride supérieure (6a) lors de l'événement d'impact de véhicule.

9. Système de rail de siège (S) selon une quelconque revendication précédente,
**caractérisé en ce que** la structure de rail avant (20) comprend une partie supérieure (20b), dans lequel la partie supérieure (20b) comprend une partie de fixation avant (20c) configurée pour fixer une partie avant (4a) du siège de véhicule (4) à la structure de rail avant (20) ; dans lequel la structure de rail arrière (30) comprend une partie supérieure (30b), dans lequel la partie supérieure (30b) comprend une partie de fixation arrière (30c) configurée pour fixer une partie arrière (4b) du siège de véhicule (4) à la structure de rail arrière (30) .

10. Système de rail de siège (S) selon la revendication 9,
**caractérisé en ce que** la partie de fixation avant (20c) est positionnée dans la direction longitudinale de véhicule (D_{LO}) entre une extrémité avant (21a) et une extrémité arrière (21b) de la partie inférieure (20a) de la structure de rail avant (20) ; et/ou dans lequel la partie de fixation arrière (30c) est positionnée dans la direction longitudinale de véhicule (D_{LO}) entre une extrémité avant (31a) et une extrémité arrière (31b) de la partie inférieure (30a) de la structure de rail arrière (30) .

11. Système de rail de siège (S) selon la revendication 10,
**caractérisé en ce que** la partie de fixation avant (20c) est positionnée au centre dans la structure de rail avant (20) dans la direction longitudinale de véhicule (D_{LO}) entre l'extrémité avant (21a) et l'extrémité arrière (21b), dans lequel le positionnement central permet une répartition de charge sur la longueur de la partie inférieure (20a) dans la direction longitudinale de véhicule (D_{LO}) entre l'extrémité avant (21a) et l'extrémité arrière (21b) lors de l'événement d'impact de véhicule ; et/ou dans lequel la partie de fixation arrière (30c) est positionnée au centre dans la structure de rail arrière (30) dans la direction longitudinale de véhicule (D_{LO}) entre l'extrémité avant (31a) et l'extrémité arrière (31b), dans lequel le positionnement central permet une répartition de charge sur la longueur de la partie inférieure (30a) dans la direction longitudinale de véhicule (D_{LO}) entre l'extrémité avant (31a) et l'extrémité arrière (31b) lors de l'événement d'impact de véhicule.

12. Système de rail de siège (S) selon une quelconque revendication précédente,
**caractérisé en ce que** le rail supérieur (1) comprend en outre une structure intermédiaire (1a) agencée entre et reliée à la structure de rail avant (20) et à la structure de rail arrière (30), dans lequel la structure intermédiaire est agencée au-dessus de l'élément de charge (5).

13. Système de rail de siège (S) selon une quelconque revendication précédente,
**caractérisé en ce que** le système de rail de siège (S) comprend en outre des structures portantes (10) s'étendant latéralement, dans lequel les structures portantes (10) sont fixées au rail supérieur (1) et s'étendent dans des directions opposées à partir du rail supérieur (1), dans lequel les structures portantes (10) sont configurées pour venir en prise de manière mobile avec le rail inférieur (2).

14. Système de rail de siège (S) selon la revendication 13,
**caractérisé en ce que** les structures portantes (10) comprennent des roulements (10a), dans lequel le rail inférieur (2) comprend des surfaces portantes (12) agencées latéralement sur des côtés opposés de l'élément de charge (5), dans lequel les roulements (10a) et les surfaces portantes (12) sont configurés pour interagir les unes avec les autres lorsque le rail supérieur (1) est déplacé par rapport au rail inférieur (2) .

15. Véhicule (V) comprenant le système de rail de siège (S) selon l'une quelconque des revendications 1 à 14.
